# EUROPEAN PATENT APPLICATION

(11) **EP 4 580 018 A2**
(43) Date of publication of application: **02.07.2025**
(21) Application number: 24220850.2
(22) Date of filing: 18.12.2024
(51) Int. Cl.: H02M 1/00, H02M 3/155

(54) **INVERTER, CONTROL METHOD OF INVERTER, AND POWER SYSTEM**

(30) Priority: 29.12.2023 CN 202311872800
(71) Applicant: Sungrow Power Supply Co., Ltd., Hefei, Anhui 230088 (CN)
(72) Inventor: ZHOU, Yinyin, Hefei, Anhui, 230088 (CN); YANG, Yongchang, Hefei, Anhui, 230088 (CN); WANG, Rui, Hefei, Anhui, 230088 (CN); CHEN, Tiantian, Hefei, Anhui, 230088 (CN); WANG, Wei, Hefei, Anhui, 230088 (CN); HUANG, Zhifeng, Hefei, Anhui, 230088 (CN); YU, Yanfei, Hefei, Anhui, 230088 (CN)
(74) Representative: Zacco Norway AS

(57) **Abstract**

An inverter, a control method of the inverter, and a power system are provided. The inverter includes a DC bus, an inversion circuit, a controller, and multiple boost circuits. An input terminal of each boost circuit is configured to connect to a corresponding photovoltaic unit, output terminals of the boost circuits are connected in parallel and connected to the DC bus, and the inversion circuit is configured to convert DC power outputted by the DC bus into AC power. The controller is configured to: determine, during an operation stage of the inverter, a to-be-adjusted boost circuit from the boost circuits, in response to determining that there is a loss boost circuit in a preset loss condition among the boost circuits; and adjust the to-be-adjusted boost circuit while ensuring that a change threshold for a total power output of the boost circuits is less than a preset adjustment threshold.

## Description

### FIELD

The present disclosure relates to the technical field of inverters, and in particular to an inverter, a control method of the inverter, and a power system.

### BACKGROUND

An inverter in multiple independent maximum power point tracking (MPPT) boost circuits provide assurance for solving complex terrain configurations and increasing power generation. However, due to differences in direct current (DC) configurations, there is a voltage difference between input voltages of the MPPT boost circuits. This results in a high boost ratio for an MPPT boost circuit having a low input voltage and a great switching loss for the MPPT boost circuits.

### SUMMARY

Based on the above, it is necessary to provide an inverter, a control method thereof, and a power system, with which a switching loss of boost circuits in the inverter can be reduced, so as to solve the above-mentioned technical problem.

In a first aspect, an inverter is provided in the present disclosure. The inverter includes a DC bus, an inversion circuit, a controller, and multiple boost circuits, where an input terminal of each of the boost circuits is configured to connect to a corresponding photovoltaic unit, output terminals of the boost circuits are connected in parallel and connected to the DC bus, the inversion circuit is configured to convert DC power outputted by the DC bus into AC power, and the controller is connected to the boost circuits, and the controller is configured to:
determine, during an operation stage of the inverter, a to-be-adjusted boost circuit from the boost circuits, in response to determining that there is a loss boost circuit in a preset loss condition among the boost circuits, where the preset loss condition refers to an operation condition where there is a mismatch of input voltages in the boost circuits, resulting in a boost ratio greater than a preset boost ratio; and
adjust the to-be-adjusted boost circuit while ensuring that a change threshold for a total power output of the boost circuits is less than a preset adjustment threshold, to reduce a boost ratio of the loss boost circuit.

In an embodiment, the determining a to-be-adjusted boost circuit from the boost circuits includes: determining the to-be-adjusted boost circuit from the boost circuits based on first attribute information of the boost circuits.

In an embodiment, the first attribute information includes at least one of a temperature, an input voltage, and an input power; and
the determining a to-be-adjusted boost circuit from the boost circuits based on first attribute information of the boost circuits includes:
determining, from the boost circuits, a boost circuit which has a temperature satisfying a preset temperature condition as the to-be-adjusted boost circuit, in a case where the first attribute information includes a temperature;
determining, from the boost circuits, a boost circuit which has an input voltage satisfying a preset voltage condition as the to-be-adjusted boost circuit, in a case where the first attribute information includes an input voltage; and
determining, from the boost circuits, a boost circuit which has an input power satisfying a preset power condition as the to-be-adjusted boost circuit, in a case where the first attribute information includes an input power.

In an embodiment, the boost circuit which has a temperature satisfying a preset temperature condition includes at least one of: a boost circuit having a highest temperature, a boost circuit having a lowest temperature, a boost circuit having a temperature greater than or equal to a first preset temperature threshold, and a boost circuit having a temperature less than or equal to a second preset temperature threshold;
the boost circuit which has an input voltage satisfying a preset voltage condition includes at least one of: at least one boost circuit of two boost circuits having an input voltage difference greater than or equal to a first preset voltage difference threshold, a boost circuit having a highest input voltage, and a boost circuit having a lowest input voltage; and
the boost circuit which has an input power satisfying a preset power condition includes at least one of: a boost circuit having a highest input power and a boost circuit having a lowest input power.

In an embodiment, the determining that there is a loss boost circuit in a preset loss condition among the boost circuits includes:
obtaining second attribute information of the boost circuits; and
determining, from the boost circuits, a boost circuit whose second attribute information satisfies a preset attribute condition as the loss boost circuit in the preset loss condition.

In an embodiment, the second attribute information includes at least one of a temperature and an input voltage; and
the determining, from the boost circuits, a boost circuit whose second attribute information satisfies a preset attribute condition as the loss boost circuit in the preset loss condition includes:
determining, from the boost circuits, a boost circuit which has a temperature greater than or equal to a third preset temperature threshold as the loss boost circuit in the preset loss condition, in a case where the second attribute information includes a temperature;
determining, from the boost circuits, at least one boost circuit of two boost circuits having an input voltage difference greater than or equal to a second preset voltage difference threshold as the loss boost circuit in the preset loss condition, in a case where the second attribute information includes an input voltage; and
determining, from the boost circuits, a boost circuit which has a temperature greater than or equal to a fourth preset temperature threshold and has an input voltage difference greater than or equal to a third preset voltage difference threshold as the loss boost circuit in the preset loss condition, in a case where the second attribute information includes a temperature and an input voltage.

In an embodiment, the adjusting the to-be-adjusted boost circuit while ensuring that a change threshold for a total power output of the boost circuits is less than a preset adjustment threshold, to reduce a boost ratio of the loss boost circuit, includes:
adjusting an input voltage of the to-be-adjusted boost circuit while ensuring that an equivalent input voltage of the inverter is within a designated voltage range, to reduce the boost ratio of the loss boost circuit; where the equivalent input voltage is determined based on the input voltages of the boost circuits, and the designated voltage range corresponds to a voltage limiting power in a power-voltage curve of the inverter; or
adjusting the input voltage of the to-be-adjusted boost circuit, and determining whether a total power output of the boost circuits after the adjustment is less than a total power output of the boost circuits before the adjustment; drawing back the adjustment on the input voltage of the to-be-adjusted boost circuit, in response to determining that the total power output after the adjustment is less than the total power output before the adjustment; and keeping the adjustment on the input voltage of the to-be-adjusted boost circuit, in response to determining that the total power output after the adjustment is greater than or equal to the total power output before the adjustment, until the total power output of the boost circuits after the adjustment is less than the total power output of the boost circuits before the adjustment.

In an embodiment, the adjusting the input voltage of the to-be-adjusted boost circuit includes: increasing or decreasing the input voltage of the to-be-adjusted boost circuit by a designated adjustment step size;
where the input voltage of the to-be-adjusted boost circuit is increased in a case where the to-be-adjusted boost circuit is the loss boost circuit; and the input voltage of the to-be-adjusted boost circuit is decreased in a case where the to-be-adjusted boost circuit is not the loss boost circuit.

In an embodiment, the designated adjustment step size is preset, or is determined based on a difference between third attribute information of the loss boost circuit and third attribute information of the boost circuit having a lowest boost ratio.

In an embodiment, each of the boost circuit includes a boost switch transistor, and the adjusting the input voltage of the to-be-adjusted boost circuit includes:
adjusting a duty cycle of a control signal outputted to the boost switch transistor of the to-be-adjusted boost circuit, to adjust the input voltage of the to-be-adjusted boost circuit.

In a second aspect, a control method of an inverter is further provided in the present disclosure. The inverter comprises a DC bus, an inversion circuit, a controller, and a plurality of boost circuits, an input terminal of each of the boost circuits is configured to connect to a corresponding photovoltaic unit, output terminals of the boost circuits are connected in parallel and connected to the DC bus, the inversion circuit is configured to convert DC power outputted by the DC bus into AC power, and wherein the control method of the inverter comprises: determining, during an operation stage of the inverter, a to-be-adjusted boost circuit from the boost circuits, in response to determining that there is a loss boost circuit in a preset loss condition among the boost circuits, wherein the preset loss condition refers to an operation condition where there is a mismatch of input voltages in the boost circuits, resulting in a boost ratio greater than a preset boost ratio; and adjusting the to-be-adjusted boost circuit while ensuring that a change threshold for a total power output of the boost circuits is less than a preset adjustment threshold, to reduce a boost ratio of the loss boost circuit.

In a third aspect, a power system is provided in the present disclosure. The power system includes a plurality of photovoltaic units and at least one foregoing inverter.

In the inverter, the control method of the inverter, and the power system, the inverter includes a DC bus, an inversion circuit, a controller, and multiple boost circuits, where an input terminal of each of the boost circuits is configured to connect to a corresponding photovoltaic unit, output terminals of the boost circuits are connected in parallel and connected to the DC bus, the inversion circuit is configured to convert DC power outputted by the DC bus into AC power, and the controller is connected to the boost circuits.

In the embodiment of the present disclosure, the controller is configured to: determine, during an operation stage of the inverter, a to-be-adjusted boost circuit from the boost circuits, in response to determining that there is a loss boost circuit in a preset loss condition among the boost circuits; adjust the to-be-adjusted boost circuit while ensuring that a change threshold for a total power output of the boost circuits is less than a preset adjustment threshold, to reduce a boost ratio of the loss boost circuit. The preset loss condition refers to an operation condition where there is a mismatch of input voltages in the boost circuits, resulting in a boost ratio greater than a preset boost ratio. In this way, while ensuring that the total power output of the boost circuits satisfies a current user demand of power, the difference of the boost circuits, such as the difference of input voltages of the boost circuits, is reduced, a degree of the mismatch in the boost circuits is reduced, and thereby a switch loss of the boost circuits in the inverter is reduced.

### BRIEF DESCRIPTION OF THE DRAWINGS

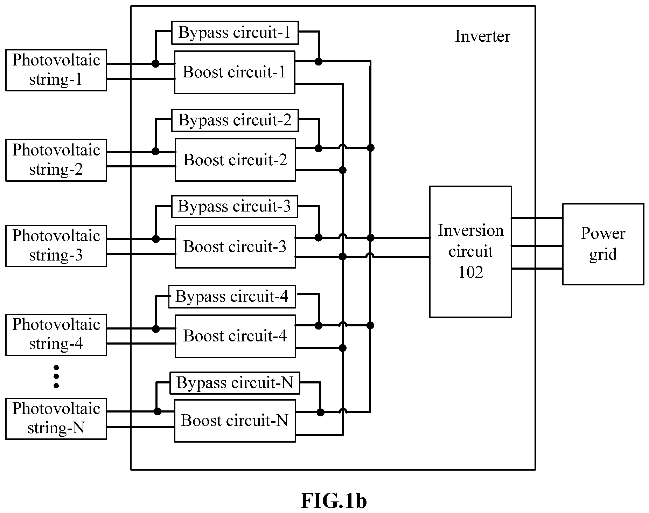

FIG.la and FIG.1b are each a schematic diagram of a topology of an inverter according to an embodiment;
FIG.2 is a flowchart illustrating an execution method of a controller in an inverter according to an embodiment; and
FIG.3 is a schematic power-voltage curve graph of an inverter according to an embodiment.

### DETAILED DESCRIPTION

To make the objectives, technical solutions, and advantages of the present disclosure clearer, the present disclosure is further described in detail below in conjunction with the drawings and the embodiments. It should be understood that the embodiments described herein are only for explaining the present disclosure, and are not intended to limit the present disclosure.

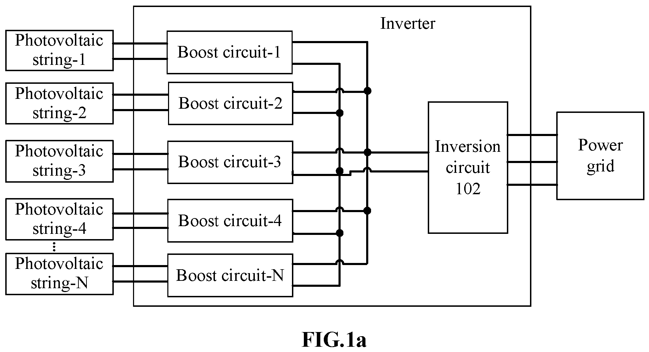

As shown in FIG.1a and FIG.1b, an inverter provided according to an embodiment includes a DC bus, an inversion circuit 102, a controller (not shown), and multiple (MPPT) boost circuits. Optionally, as shown in FIG. 1b, the inverter provided according to an embodiment may further include multiple bypass circuits connected to the boost circuits in parallel, respectively. The boost circuits in the inverter are connected to photovoltaic string (PV) units. The inversion circuit 102 of the inverter may be connected to a power grid. The quantity of the boost circuits, the quantity of the bypass circuits, the quantity of the PV units shown in the drawings are illustrative and are not meant to limit the present disclosure. The inversion circuit 102 is connected to the DC bus, and is configured to convert DC power V(dc) outputted from the DC bus into alternating current (AC) power.

In some implementations, each of the boost circuits may include at least a boost power transistor, i.e., a boost switch transistor S (hereinafter referred to as switch transistor S). An input terminal of each boost circuit is configured to connect to a corresponding photovoltaic unit, and each photovoltaic unit includes at least one photovoltaic string (PV). Different photovoltaic units may include different numbers of PV strings.

In some implementations, a boost circuit corresponding to a PV1 Input may include at least a switch S1 and an inductor L1, and a boost circuit corresponding to a PV2 Input may include at least a switch S2 and an inductor L2. Output terminals of the boost circuits are connected in parallel and connected to the DC bus.

In some implementations, the inversion circuit 102 may include a power transistor S3, a power transistor S4, a power transistor S5, a power transistor S6, a power transistor S7, and a power transistor S8.

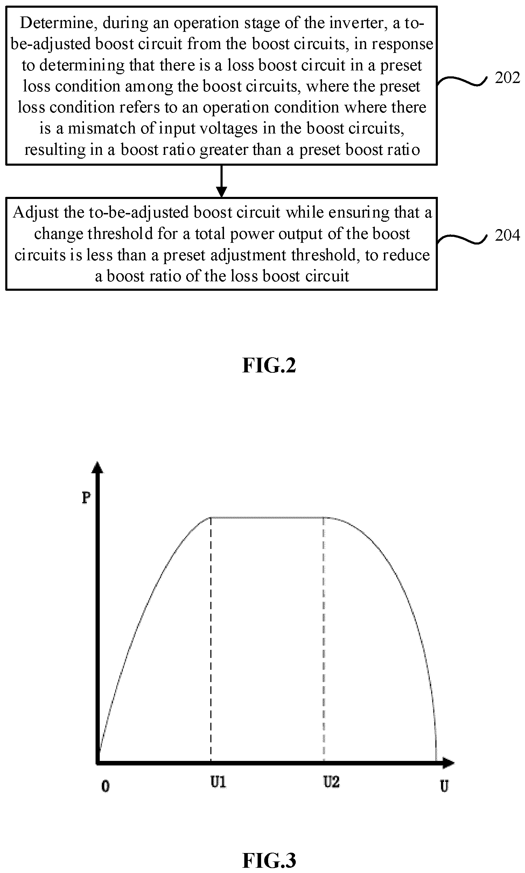

In an embodiment, as shown in FIG.2, the controller is configured to perform the following steps 202 to 204.

In step 202, during an operation stage of the inverter, a to-be-adjusted boost circuit is determined from boost circuits, in response to determining that there is a loss boost circuit in a preset loss condition among the boost circuits. The preset loss condition refers to an operation condition where there is a mismatch of input voltages in the boost circuits, resulting in a boost ratio greater than a preset boost ratio.

The operation stage of the inverter refers to a stage in which the inverter operates normally after started. A voltage outputted by the photovoltaic unit to a corresponding boost circuit serves as an input voltage of the corresponding boost circuit. A power outputted by the photovoltaic unit to a corresponding boost circuit serves as an input power of the corresponding boost circuit.

The boost ratio of a boost circuit refers to a ratio of a DC bus voltage to the input voltage of the boost circuit. The preset loss condition refers to an operation condition where there is a mismatch of input voltages in in the boost circuits (that is, there is a significant voltage difference between input voltages of the boost circuits), resulting in at least some of the boost circuits having a boost ratio greater than a preset boost ratio. The boost ratio of a boost circuit being greater than a preset boost ratio of the boost circuit may be understood as an actual boost ratio of the boost circuit being greater than the preset boost ratio of the boost circuit.

There is a correspondence relationship between the boost circuit and the preset boost ratio. Multiple factors are to be considered when determining the preset boost ratio for a boost circuit. For example, the factors such as a temperature, an input voltage, and an input power are to be considered. A preset boost ratio when considering only the temperature may be the same as or different from a preset boost ratio when considering only the input voltage. Therefore, there may be different preset boost ratios for a same boost circuit under considerations on different factors.

During the operation stage of the inverter, in a case where the controller determines that there is a loss boost circuit in a preset loss condition among the boost circuits, the controller determines at least one of the boost circuits to be the to-be-adjusted boost circuit. The to-be-adjusted boost circuit may or may not be the loss boost circuit.

In step 204, the to-be-adjusted boost circuit is adjusted while ensuring that a change threshold for a total power output of the boost circuits is less than a preset adjustment threshold, to reduce a boost ratio of the loss boost circuit.

The total power output of the boost circuits may be understood as an output power of the inverter. In a case where the change threshold for the total power output of the boost circuits is less than the preset adjustment threshold, the output power of the inverter remains unchanged, and the output power of the inverter meets a current user demand of power. Adjustment on the to-be-adjusted boost circuit may involve adjusting an input voltage of the to-be-adjusted boost circuit. By adjusting the to-be-adjusted boost circuit, the boost ratio of the loss boost circuit is reduced directly or indirectly. In this way, while ensuring that the total power output of the boost circuits satisfies a current user demand of power, the difference of the boost circuits, such as the difference of input voltages of the boost circuits, is reduced, a degree of the mismatch in the boost circuits is reduced, and thereby a switch loss of the boost circuits in the inverter is reduced.

In an embodiment of the present disclosure, there are various manners for determining the to-be-adjusted boost circuit from the boost circuits. Exemplary explanations of the manners are described below, which are not intended to limit the present disclosure.

In an embodiment, in step 202, the determining a to-be-adjusted boost circuit from the boost circuits includes: determining the to-be-adjusted boost circuit from the boost circuits based on first attribute information of the boost circuits.

The first attribute information of a boost circuit may include information of at least one parameter related to the boost ratio of the boost circuit. Apparently, the first attribute information may be other attribute information, which is not limited herein. For example, the first attribute information of a boost circuit includes, but is not limited to, a temperature, an input voltage, and/or an input power of the boost circuit. At least one temperature sensor may be provided inside the inverter to sample temperature of the boost circuits. The temperature of the boost circuits collected by the sensor may be utilized for determination of the to-be-adjusted boost circuit and determination of the loss boost circuit in the preset loss condition. The to-be-adjusted boost circuit may be determined from the boost circuits based on at least one of the temperature, the input voltage, and the input power of the boost circuits, so as to facilitate a rapid reduction of a switch loss in the loss boost circuit.

In an embodiment, in a case where the first attribute information includes a temperature, a boost circuit which has a temperature satisfying a preset temperature condition is determined from the boost circuits, as the to-be-adjusted boost circuit.

For example, the boost circuit which has a temperature satisfying a preset temperature condition includes at least one of: a boost circuit having a highest temperature, a boost circuit having a lowest temperature, a boost circuit having a temperature greater than or equal to a first preset temperature threshold, and a boost circuit having a temperature less than or equal to a second preset temperature threshold.

That is, from the boost circuits, at least one boost circuit having the highest temperature may be determined as the to-be-adjusted boost circuit, at least one boost circuit having the lowest temperature may be determined as the to-be-adjusted boost circuit, at least one boost circuit having a temperature greater than or equal to the first preset temperature threshold is determined as the to-be-adjusted boost circuit, and/or at least one boost circuit having a temperature less than or equal to the second preset temperature threshold is determined as the to-be-adjusted boost circuit.

It can be understood that an excessively high boost ratio of the boost circuit causes a significant switch loss, which may result in an increase in the temperature of the boost circuit. Based on this, at least one boost circuit having the highest temperature may be determined as the to-be-adjusted boost circuit. An excessively high input voltage of the boost circuit results in a reduced switch loss and a relatively low temperature of the boost circuit. Based on this, at least one boost circuit having the lowest temperature may be determined as the to-be-adjusted boost circuit. The first preset temperature threshold and the second preset temperature threshold may be further set. The first preset temperature threshold is relatively high, the second preset temperature threshold is relatively low. Hence, there is a significant difference between the first preset temperature threshold and the second preset temperature threshold. Determining at least one boost circuit having a temperature greater than or equal to the first preset temperature threshold as the to-be-adjusted boost circuit is equivalent to determining at least one boost circuit having a relatively high temperature as the to-be-adjusted boost circuit. Determining at least one boost circuit having a temperature less than or equal to the second preset temperature threshold as the to-be-adjusted boost circuit is equivalent to determining at least one boost circuit having a relatively low temperature as the to-be-adjusted boost circuit.

In an embodiment, a boost circuit which has an input voltage satisfying a preset voltage condition is determined from the boost circuits, as the to-be-adjusted boost circuit, in a case where the first attribute information includes an input voltage.

For example, the boost circuit which has an input voltage satisfying a preset voltage condition includes at least one of: at least one boost circuit of two boost circuits having an input voltage difference greater than or equal to a first preset voltage difference threshold, a boost circuit having a highest input voltage, and a boost circuit having a lowest input voltage.

That is, from the boost circuits, at least one boost circuit of two boost circuits having an input voltage difference greater than or equal to a first preset voltage difference threshold may be determined as the to-be-adjusted boost circuit, at least one boost circuit having the highest input voltage may be determined as the to-be-adjusted boost circuit, and/or at least one boost circuit having the lowest input voltage may be determined as the to-be-adjusted boost circuit.

It can be understood that a high boost ratio of the boost circuit causes a large input voltage difference between the boost circuit and other boost circuits. Based on this, the first preset voltage difference threshold may be set, and then at least one boost circuit of two boost circuits having an input voltage difference greater than or equal to the first preset voltage difference threshold may be determined as the to-be-adjusted boost circuit. An excessively high or low input voltage of the boost circuit may lead to a large input voltage difference between the boost circuit and other boost circuits. Based on this, at least one boost circuit having the highest input voltage may be determined as the to-be-adjusted boost circuit and/or at least one boost circuit having the lowest input voltage may be determined as the to-be-adjusted boost circuit.

In an embodiment, a boost circuit which has an input power satisfying a preset power condition is determined from the boost circuits, as the to-be-adjusted boost circuit, in a case where the first attribute information includes an input power.

For example, the boost circuit which has an input power satisfying a preset power condition includes at least one of: a boost circuit having a highest input power and a boost circuit having a lowest input power.

That is, from the boost circuits, at least one boost circuit having the highest input power may be determined as the to-be-adjusted boost circuit, and/or at least one boost circuit having the lowest input power may be determined as the to-be-adjusted boost circuit.

It can be understood that, an excessively high or low input power of the boost circuit may lead to a large input voltage difference between the boost circuit and other boost circuits. Based on this, at least one boost circuit having the highest input power may be determined as the to-be-adjusted boost circuit and/or at least one boost circuit having the lowest input power may be determined as the to-be-adjusted boost circuit.

In an embodiment, the to-be-adjusted boost circuit may include the boost circuit which satisfies the preset temperature condition, the boost circuit which satisfies the preset voltage condition, and/or the boost circuit which satisfies the preset power condition.

In another embodiment, a boost circuit satisfying other preset conditions may be determined from the boost circuits as the to-be-adjusted boost circuit, in a case where the first attribute information includes a temperature and an input voltage, or includes a temperature and an input power, or includes an input voltage and an input power, or includes a temperature, an input voltage and an input power, which is not limited in the embodiments of the present disclosure.

In an embodiment, the temperature, the input voltage, the input power and other factors are considered when determining the to-be-adjusted boost circuit. In this way, after the to-be-adjusted boost circuit is adjusted, the difference between input voltages of the boost circuits is reduced quickly, and thereby the switch loss of the loss boost circuit is reduced directly or indirectly.

In an embodiment of the present disclosure, there are various manners for determining the loss boost circuit which is in a preset loss condition. Exemplary explanations of the manners are described below, which are not intended to limit the present disclosure.

In an embodiment, in step 202, the determining that there is a loss boost circuit in a preset loss condition among the boost circuits includes: obtaining second attribute information of the boost circuits; and determining, from the boost circuits, a boost circuit whose second attribute information satisfies a preset attribute condition as the loss boost circuit in the preset loss condition.

The second attribute information may be different from, partially identical, or completely identical to the first attribute information. The second attribute information of a boost circuit may include information of at least one parameter related to the boost ratio of the boost circuit. Apparently, the second attribute information may be other attribute information, which is not limited herein. For example, the second attribute information of a boost circuit includes, but is not limited to, a temperature and/or an input voltage of the boost circuit.

In an embodiment, a boost circuit which has a temperature greater than or equal to a third preset temperature threshold is determined from the boost circuits, as the loss boost circuit in the preset loss condition, in a case where the second attribute information includes a temperature.

The third preset temperature threshold may be the same as or different from the first preset temperature threshold. For example, the third preset temperature threshold may be greater than the first preset temperature threshold. It may be understood that an excessive boost ratio of the boost circuit causes a significant switch loss, which may result in a sudden increase in the temperature of the boost circuit. Based on this, the boost circuit having a temperature greater than or equal to the third preset temperature threshold may be determined from the boost circuits, as the loss boost circuit in the preset loss condition.

In an embodiment, at least one boost circuit of two boost circuits having an input voltage difference greater than or equal to a second preset voltage difference threshold is determined from the boost circuits, as the loss boost circuit in the preset loss condition, in a case where the second attribute information includes an input voltage.

The second preset voltage difference threshold may be the same or different from the first preset voltage difference threshold. For example, the second preset voltage difference threshold may be greater than the first preset voltage difference threshold. It can be understood that a high boost ratio of the boost circuit causes a large input voltage difference between the boost circuit and other boost circuits. Based on this, at least one boost circuit of two boost circuits having an input voltage difference greater than or equal to a second preset voltage difference threshold is determined from the boost circuits, as the loss boost circuit in the preset loss condition.

In an embodiment, a boost circuit which has a temperature greater than or equal to a fourth preset temperature threshold and has an input voltage difference greater than or equal to a third preset voltage difference threshold is determined from the boost circuits, as the loss boost circuit in the preset loss condition, in a case where the second attribute information includes a temperature and an input voltage.

The fourth preset temperature threshold may be less than the third temperature threshold, and the third preset voltage difference threshold may be less than the second preset voltage difference threshold. A high boost ratio of the boost circuit causes an increase in the temperature of the boost circuit and a large input voltage difference between the boost circuit and other boost circuits. Based on this, a boost circuit having a temperature greater than or equal to the fourth preset temperature threshold and having an input voltage difference greater than or equal to the third preset voltage difference threshold is determined from the boost circuits, as the loss boost circuit in the preset loss condition.

In an embodiment of the present disclosure, the temperature, the input voltage, the input power, the corresponding preset temperature threshold and the preset voltage difference threshold are considered. Hence, existence of the loss boost circuit in the preset loss condition among the boost circuits can be determined accurately, so that a reliable suppression of the switch loss in the boost circuits can be achieved.

In an embodiment of the present disclosure, there are various manners for adjusting the input voltage of the to-be-adjusted boost circuit. Exemplary explanations of the manners are described below, which are not intended to limit the present disclosure.

In an embodiment, in step 204, the adjusting the to-be-adjusted boost circuit while ensuring that a change threshold for a total power output of the boost circuits is less than a preset adjustment threshold, to reduce a boost ratio of the loss boost circuit, includes:
adjusting an input voltage of the to-be-adjusted boost circuit while ensuring that an equivalent input voltage of the inverter is within a designated voltage range, to reduce the boost ratio of the loss boost circuit; where the equivalent input voltage is determined based on the input voltages of the boost circuits, and the designated voltage range corresponds to a voltage limiting power in a power-voltage curve of the inverter.

As shown in FIG.3, it can be understood that each boost circuit usually has a corresponding power-voltage curve, in which an ordinate represents an output power of the boost circuit and an abscissa represents an input voltage of the boost circuit. Different boost circuits correspond to different power-voltage curves.

In a case where the inverter includes multiple boost circuits and each of the boost circuits is connected to a corresponding photovoltaic unit, a total power output of the boost circuits may be understood as an output power of the inverter. The inverter may have an equivalent power-voltage curve, in which an ordinate represents an output power P of the inverter, and an abscissa represents an equivalent input voltage U of the inverter, where the equivalent input voltage U of the inverter is determined based on the input voltages of the boost circuits. That is, the boost circuits are considered as a whole to comprehensively consider the input voltages of the boost circuits, so as to obtain an equivalent input voltage of the inverter.

In a case of overmatching of the inverter, where the overmatching may be understood as a total power output of photovoltaic units being greater than a rated output power of the inverter, the rated output power of the inverter may be determined as a voltage limiting power of the inverter; and if the equivalent input voltage of the inverter is changed within a voltage range corresponding to the voltage limiting power, the output power of the inverter remains unchanged. In this case, a change threshold for the total power output of the boost circuits is less than the preset adjustment threshold. The example in FIG.3 illustrates a voltage range corresponding to the voltage limiting power, which is a range [U1, U2] between an equivalent input voltage U1 and an equivalent input voltage U2.

Based on this, the input voltage of the to-be-adjusted boost circuit is adjusted within the voltage range corresponding to the voltage limiting power. While reducing the boost ratio of the loss boost circuit, it is ensured that the change threshold for the total power output of the boost circuits is less than the preset adjustment threshold. In this way, it is ensured that the total power output of the boost circuits meets a current user demand of power, the difference between input voltages of the boost circuits is reduced, the degree of mismatching in the boost circuits is reduced, and thereby the switching loss in the boost circuits of the inverter is reduced.

In another implementation, the input voltage of the to-be-adjusted boost circuit is adjusted, and it is determined whether a total power output of the boost circuits after the adjustment is less than a total power output of the boost circuits before the adjustment; the adjustment on the input voltage of the to-be-adjusted boost circuit is drawn back, in response to determining that the total power output after the adjustment is less than the total power output before the adjustment; and the adjustment on the input voltage of the to-be-adjusted boost circuit is kept, in response to determining that the total power output after the adjustment is greater than or equal to the total power output before the adjustment, until the total power output of the boost circuits after the adjustment is less than the total power output of the boost circuits before the adjustment.

It can be understood that the output power of the inverter may be obtained in real time, that is, the total power output of the boost circuits may be obtained in real time. After each adjustment of the input voltage of the to-be-adjusted boost circuit, it is determined whether the total power output of the boost circuits after the present adjustment is less than the total power output of the boost circuits before the present adjustment.

In response to determining that the total power output after the adjustment is less than the total power output before the adjustment, it is indicated that the change threshold for the total power output of the boost circuits, via the present adjustment, is greater than the preset adjustment threshold, and the total power output of the boost circuits is significantly reduced. Such situation is not allowed. Therefore, it is necessary to draw back the present adjustment of the input voltage of the to-be-adjusted boost circuit, so as to increase the total power output of the boost circuits to the value before the present adjustment. Thereby, the change threshold for the total power output of the boost circuits is less than the present adjustment threshold. The adjustment of the current to-be-adjusted boost circuit terminates after the drawing back.

In response to determining that the total power output after the adjustment is greater than or equal to the total power output before the adjustment, the adjustment of the input voltage of the to-be-adjusted boost circuit is continued, until the total power output of the boost circuits after the adjustment is less than the total power output of the boost circuits before the adjustment. Then, a drawing back is performed. In this way, it is ensured that the total power output of the boost circuits meets a current user demand of power, the difference between input voltages of the boost circuits is reduced, the degree of mismatching in the boost circuits is reduced, and thereby the switching loss in the boost circuits of the inverter is reduced.

In an embodiment, the adjusting the input voltage of the to-be-adjusted boost circuit includes: increasing or decreasing the input voltage of the to-be-adjusted boost circuit by a designated adjustment step size; where the input voltage of the to-be-adjusted boost circuit is increased in a case where the to-be-adjusted boost circuit is the loss boost circuit, and the input voltage of the to-be-adjusted boost circuit is decreased in a case where the to-be-adjusted boost circuit is not the loss boost circuit.

It can be understood that based on the designated adjustment step size, the input voltage of the to-be-adjusted boost circuit can be adjusted to a target input voltage according to the designated adjustment step size, while ensuring that the change threshold for the total power output of the boost circuits is less than the preset adjustment threshold. Thereby, a rapid reduction in the switch loss of the boost circuits is achieved. Generally, the loss boost circuit has a higher boost ratio and a lower input voltage. Therefore, it is feasible to increase the input voltage of the loss boost circuit. In a case where the to-be-adjusted boost circuit is not the loss boost circuit, the to-be-adjusted boost circuit may have a higher input voltage and a lower boost ratio. In this case, it is feasible to reduce the input voltage of the to-be-adjusted boost circuit, so that the boost ratio of the loss boost circuit is reduced indirectly. In a case where the to-be-adjusted boost circuit has the lowest boost ratio, it is indicated that the to-be-adjusted boost circuit has the highest input voltage. Therefore, it is feasible to reduce the input voltage of the to-be-adjusted boost circuit, so that the difference between input voltages of the boost circuits is reduced, boost ratios of other boost circuits are reduced, and the switching loss of the boost circuits is reduced.

In an embodiment, the designated adjustment step size is preset, or is determined based on a difference between third attribute information of the loss boost circuit and third attribute information of the boost circuit having a lowest boost ratio.

It can be understood that in a case where the designated adjustment step size is preset, the input voltage of the to-be-adjusted boost circuit can be increased or decreased gradually to a target input voltage. Such gradual adjustment is conducive to accurately ensuring that the change threshold for the total power output of the boost circuits is less than the preset adjustment threshold, so that a reliable reduction of the switch loss in the boost circuits is achieved.

The third attribute information of the loss boost circuit may include information of at least one parameter related to the boost ratio of the boost circuit. Apparently, the third attribute information may be other attribute information, which is not limited herein. The third attribute information may be different from, partially identical, or completely identical to the first attribute information. For example, the designated adjustment step size is determined based on a difference between an input voltage of the loss boost circuit and an input voltage of a boost circuit having the minimum boost ratio, and the input voltage of the loss boost circuit is adjusted to the target input voltage based on the designated adjustment step size, while ensuring that the change threshold for the total power output of the boost circuits is less than the preset adjustment threshold. Thereby, the difference between input voltages of the loss boost circuit and other boost circuits is reduced, the boost ratio of the loss boost circuit is reduced, and the switch loss of the loss boost circuit is reduced.

In an embodiment, the increasing or decreasing the input voltage of the to-be-adjusted boost circuit includes: adjusting a duty cycle of a control signal outputted to a boost switch transistor S of the to-be-adjusted boost circuit, to adjust the input voltage of the to-be-adjusted boost circuit.

It is to be understood that, although the steps in the flowchart of the foregoing embodiment are shown sequentially as indicated by the arrows, the steps are not necessarily performed according to the sequence indicated by the arrows. Unless otherwise explicitly specified herein, the sequence in which the steps are performed is not limited, and the steps may be performed in other sequences. In an embodiment, at least some of steps in the flowchart of the above embodiments may include multiple steps or stages. The steps or stages are not necessarily performed simultaneously, but may be performed at different time instants. In an embodiment, the sub-steps or stages are not necessarily performed sequentially, but may be performed in turn or alternately with another step or at least some of the other steps or stages.

In an embodiment, a control method of an inverter is provided. The inverter includes a DC bus, an inversion circuit, a controller, and multiple boost circuits. An input terminal of each of the boost circuits is configured to connect to a corresponding photovoltaic unit. Output terminals of the boost circuits are connected in parallel and connected to the DC bus. The inversion circuit is configured to convert DC power outputted by the DC bus into AC power. Each of the boost circuits is connected to the controller. The control method of the inverter may be performed by the controller in the inverter. The control method of the inverter includes:
determining, during an operation stage of the inverter, a to-be-adjusted boost circuit from the boost circuits, in response to determining that there is a loss boost circuit in a preset loss condition among the boost circuits, where the preset loss condition refers to an operation condition where there is a mismatch of input voltages in the boost circuits, resulting in a boost ratio greater than a preset boost ratio; and
adjusting the to-be-adjusted boost circuit while ensuring that a change threshold for a total power output of the boost circuits is less than a preset adjustment threshold, to reduce a boost ratio of the loss boost circuit.

The control method of the inverter provided in the embodiment and the inverter provided in any of the above embodiments pertain to the same invention concept and can achieve the same technical effect. Hence, repetitive content is omitted here.

In an embodiment, a power system is provided, including multiple photovoltaic units and at least one inverter as provided in any of the above embodiments.

The power system provided in the embodiment and the inverter provided in any of the above embodiments pertain to the same invention concept and can achieve the same technical effect. Hence, repetitive content is not repeated here.

The technical features of the above embodiments can be combined in any manner. To make the description concise, not all possible combinations of the technical features in the above embodiments are described. However, a combination of the technical features, as long as there is no contradiction therein, should be considered within the scope of this specification.

The above embodiments present only some implementations of the present disclosure, which are described in detail but should not be construed as a limitation to a scope of the present disclosure. It should be noted that variations and improvements can be made by those skilled in the art without departing from the idea of the present disclosure. These variations and improvements fall within the protection scope of the present disclosure. Therefore, the protection scope of the present disclosure shall be in accordance with the appended claims.

## Claims

1. An inverter, comprising a direct current DC bus, an inversion circuit, a controller, and a plurality of boost circuits, wherein an input terminal of each of the boost circuits is configured to connect to a corresponding photovoltaic unit, output terminals of the boost circuits are connected in parallel and connected to the DC bus, the inversion circuit is configured to convert DC power outputted by the DC bus into alternating current AC power, and the controller is connected to the boost circuits, and wherein the controller is configured for:
determining, during an operation stage of the inverter, a to-be-adjusted boost circuit from the boost circuits, in response to determining that there is a loss boost circuit in a preset loss condition among the boost circuits, wherein the preset loss condition is an operation condition where there is a mismatch of input voltages in the boost circuits, resulting in a boost ratio greater than a preset boost ratio; and
adjusting the to-be-adjusted boost circuit while ensuring that a change threshold for a total power output of the boost circuits is less than a preset adjustment threshold, to reduce a boost ratio of the loss boost circuit.

2. The inverter according to claim 1, wherein the determining the to-be-adjusted boost circuit from the boost circuits comprises:
determining the to-be-adjusted boost circuit from the boost circuits based on first attribute information of the boost circuits.

3. The inverter according to claim 2, wherein the first attribute information comprises at least one of a temperature, an input voltage, and an input power; and
the determining the to-be-adjusted boost circuit from the boost circuits based on first attribute information of the boost circuits comprises:
determining, from the boost circuits, a boost circuit which has a temperature satisfying a preset temperature condition as the to-be-adjusted boost circuit, in a case where the first attribute information comprises the temperature;
determining, from the boost circuits, a boost circuit which has an input voltage satisfying a preset voltage condition as the to-be-adjusted boost circuit, in a case where the first attribute information comprises the input voltage; and
determining, from the boost circuits, a boost circuit which has an input power satisfying a preset power condition as the to-be-adjusted boost circuit, in a case where the first attribute information comprises the input power.

4. The inverter according to claim 3, wherein
the boost circuit which has the temperature satisfying the preset temperature condition comprises at least one of: a boost circuit having a highest temperature, a boost circuit having a lowest temperature, a boost circuit having a temperature greater than or equal to a first preset temperature threshold, and a boost circuit having a temperature less than or equal to a second preset temperature threshold;
the boost circuit which has the input voltage satisfying the preset voltage condition comprises at least one of: at least one boost circuit of two boost circuits having an input voltage difference greater than or equal to a first preset voltage difference threshold, a boost circuit having a highest input voltage, and a boost circuit having a lowest input voltage; and
the boost circuit which has the input power satisfying the preset power condition comprises at least one of: a boost circuit having a highest input power and a boost circuit having a lowest input power.

5. The inverter according to claim 1, wherein the determining that there is the loss boost circuit in the preset loss condition among the boost circuits comprises:
obtaining second attribute information of the boost circuits; and
determining, from the boost circuits, a boost circuit whose second attribute information satisfies a preset attribute condition as the loss boost circuit in the preset loss condition.

6. The inverter according to claim 5, wherein the second attribute information comprises at least one of a temperature and an input voltage; and
the determining, from the boost circuits, the boost circuit whose second attribute information satisfies the preset attribute condition as the loss boost circuit in the preset loss condition, comprises:
determining, from the boost circuits, a boost circuit which has a temperature greater than or equal to a third preset temperature threshold as the loss boost circuit in the preset loss condition, in a case where the second attribute information comprises the temperature;
determining, from the boost circuits, at least one boost circuit of two boost circuits having an input voltage difference greater than or equal to a second preset voltage difference threshold as the loss boost circuit in the preset loss condition, in a case where the second attribute information comprises the input voltage; and
determining, from the boost circuits, a boost circuit which has a temperature greater than or equal to a fourth preset temperature threshold and has an input voltage difference greater than or equal to a third preset voltage difference threshold as the loss boost circuit in the preset loss condition, in a case where the second attribute information comprises the temperature and the input voltage.

7. The inverter according to claim 1, wherein the adjusting the to-be-adjusted boost circuit while ensuring that the change threshold for the total power output of the boost circuits is less than the preset adjustment threshold, to reduce the boost ratio of the loss boost circuit, comprises:
adjusting an input voltage of the to-be-adjusted boost circuit while ensuring that an equivalent input voltage of the inverter is within a designated voltage range, to reduce the boost ratio of the loss boost circuit, wherein the equivalent input voltage is determined based on the input voltages of the boost circuits, and the designated voltage range corresponds to a voltage limiting power in a power-voltage curve of the inverter; or
adjusting the input voltage of the to-be-adjusted boost circuit, and determining whether the total power output of the boost circuits after the adjustment is less than the total power output of the boost circuits before the adjustment; drawing back the adjustment on the input voltage of the to-be-adjusted boost circuit, in response to determining that the total power output after the adjustment is less than the total power output before the adjustment; and keeping the adjustment on the input voltage of the to-be-adjusted boost circuit, in response to determining that the total power output after the adjustment is greater than or equal to the total power output before the adjustment, until the total power output of the boost circuits after the adjustment is less than the total power output of the boost circuits before the adjustment.

8. The inverter according to claim 7, wherein the adjusting the input voltage of the to-be-adjusted boost circuit comprises:
increasing or decreasing the input voltage of the to-be-adjusted boost circuit by a designated adjustment step size;
wherein the input voltage of the to-be-adjusted boost circuit is increased in a case where the to-be-adjusted boost circuit is the loss boost circuit; and the input voltage of the to-be-adjusted boost circuit is decreased in a case where the to-be-adjusted boost circuit is not the loss boost circuit.

9. The inverter according to claim 8, wherein the designated adjustment step size is preset, or is determined based on a difference between third attribute information of the loss boost circuit and third attribute information of the boost circuit having a lowest boosting ratio.

10. The inverter according to claim 8, wherein each of the boost circuit comprises a boost switch transistor, and the adjusting the input voltage of the to-be-adjusted boost circuit comprises:
adjusting a duty cycle of a control signal outputted to the boost switch transistor of the to-be-adjusted boost circuit, to adjust the input voltage of the to-be-adjusted boost circuit.

11. A control method of an inverter, wherein the inverter comprises a DC bus, an inversion circuit, a controller, and a plurality of boost circuits, an input terminal of each of the boost circuits is configured to connect to a corresponding photovoltaic unit, output terminals of the boost circuits are connected in parallel and connected to the DC bus, the inversion circuit is configured to convert DC power outputted by the DC bus into AC power, and wherein the control method of the inverter comprises:
determining, during an operation stage of the inverter, a to-be-adjusted boost circuit from the boost circuits, in response to determining that there is a loss boost circuit in a preset loss condition among the boost circuits, wherein the preset loss condition refers to an operation condition where there is a mismatch of input voltages in the boost circuits, resulting in a boost ratio greater than a preset boost ratio; and
adjusting the to-be-adjusted boost circuit while ensuring that a change threshold for a total power output of the boost circuits is less than a preset adjustment threshold, to reduce a boost ratio of the loss boost circuit.

12. A power system, comprising a plurality of photovoltaic units and at least one inverter according to any one of claims 1 to 10.
